(19) **Europäisches Patentamt**

**European Patent Office**

**Office européen des brevets**

(11) **EP 1 120 733 B1**

(12) **EUROPEAN PATENT SPECIFICATION**

(45) Date of publication and mention
of the grant of the patent:
**20.12.2006 Bulletin 2006/51**

(51) Int Cl.:
***G06K 7/00*** (2006.01)

(21) Application number: **00101542.9**

(22) Date of filing: **27.01.2000**

(54) **Apparatus for identifying article**

Vorrichtung zur Identifizierung von einem Gegenstand

Appareil de détection d'article

(84) Designated Contracting States:
**DE FR GB**

(43) Date of publication of application:
**01.08.2001 Bulletin 2001/31**

(73) Proprietor: **MITSUBISHI MATERIALS
CORPORATION**
**Chiyoda-ku,**
**Tokyo 100-004 (JP)**

(72) Inventors:
• **Gakuji, Uozumi,**
c/o Mitsubishi Materials Corp.
**Omiya-shi,**
**Saitama 330-0835 (JP)**
• **Ishihara, Osamu**
c/o Mitsubishi Materials Corp.
**Omiya-shi,**
**Saitama 330-0835 (JP)**

(74) Representative: **Gille Hrabal Struck Neidlein Prop
Roos**
**Patentanwälte**
**Brucknerstrasse 20**
**40593 Düsseldorf (DE)**

(56) References cited:
**WO-A-99/33017**          **GB-A- 2 274 373**

• **PATENT ABSTRACTS OF JAPAN vol. 1999, no.
07, 31 March 1999 (1999-03-31) & JP 08 316888 A
(INTERNATL BUSINESS MACH CORP &LT;
IBM&GT;), 29 November 1996 (1996-11-29) & US
5 521 601 A (KANDLUR DILIP D ET AL) 28 May
1996 (1996-05-28)**

**Description**

BACKGROUND OF THE INVENTION

1. Field of the Invention

The present invention relates to an apparatus for identifying an article using a RFID (Radio Frequency Identification) technique. More particularly, it relates to an apparatus for identifying an article, by attaching a tag having the RFID element to an article, and then by interrogating the tag with an interrogator.

2. Description of the Related Art

Conventionally, as an identifying apparatus, a tag identifying system is known, in which a single two-way communication channel is provided between an interrogator and a plurality of tags within range of the interrogator. Initially the identifications of the tags are not known to the interrogator, and the tags are activated when the interrogator responds to a signal of a single frequency, and each tag is enable to inactivate itself (Japanese Unexamined Patent Publication No. 8-316888). In this tag identifying system, at first broadcasting, the interrogator broadcasts a first inquiry message including a first signal used for activating all tags within range of the interrogator and a first value indicating the number of the tags within range of the interrogator, and a storage unit that is provided for each tag stores an identification record that is not identified by the interrogator into a memory thereof by responding to the first inquiry message.

Further, it is arranged that a first residual tag forming unit provided in each tag performs the respective calculations based on the first value, random bits for each tag, and the stored identification record in response to a reception of the first inquiry message, and these tags are inactivated when the respective calculations result in predetermined consequences, so as to form a first group of activated residual tags. It is arranged that, after a first inactivating unit for identifying each tag that is activated in the first group has modified the identification record stored in the memory of each tag in the first group so as to indicate that an identification by the interrogator has succeeded, these tags are inactivated.

Moreover, it is arranged after the first broadcasting that the interrogator broadcasts a second inquiry message from the interrogator including a second signal that activates all tags within range of the interrogator and a second value that indicates the number of the unidentified tags within range of the interrogator, and the second value is used in place of the first value, and a second residual tag forming unit and a second inactivating unit that perform the same processes as the first residual tag forming unit and the first inactivating unit form a second group of activated residual tags, so as to increase the number of identified tags. Further, the processes preformed by the second broadcasting unit, the second residual tag forming unit, and the second inactivating unit use the inquiry message having a next signal and a next value until the identification of all tags within range of the interrogator is complete.

In the above-described tag identifying system, the tags are divided into small groups, and the tags of one group are identified at one time so as to save electrical power by turning off the power supply for the tags not belonging to the group which is presently being identified. Each tag itself enters the group by performing a calculation with a parameter that is stored in the tag and a parameter that is received from the interrogator.

However, in the above-mentioned conventional tag identifying system disclosed in the Japanese Unexamined Patent Publication No. 8-316888, when the tag overlaps with another tag and/or a metal plate, a mutual induction (inducing action) is generated between an antenna coil of the tag and an antenna coil of the other tag or the metal plate, and thus a resonant frequency of the tag changes. Consequently, the tag no longer oscillates even if the interrogator forms an alternating magnetic field in the surroundings thereof, i.e., even if a radio wave with which the tag (the tags do not overlap with each other) resonates is transmitted from the transmitting/receiving antenna of the interrogator, and electrical power is no longer supplied to the RFID element of the tag. As a result, there is a problem in that the interrogator is not able to identify overlapping tags. Document GB-A-2 274 373 discloses a system for detecting stacked object. The detector has reading antennas at an angle to the direction of travel of the objects and the tags are aligned at a different angle.

SUMMARY OF THE INVENTION

Accordingly, it is an object of the present invention to provide an apparatus and a method for identifying an article, in which an interrogator is securely able to identify a tag, the tag overlapping with another tag or a metal plate.

The above-mentioned object of the present invention can be achieved with the features of claim 1 and 2.

Although the plurality of tags have the same resonant frequencies individually, by overlapping the tags, each of the tags has a different resonant frequency according to the mutual induction of the antenna coils of the tags between each other. That is, when the plurality of tags is overlapped, each tag has an intrinsic resonant frequency that is determined by a distance from other overlapped tags or an arrangement thereof.

As a result, according to the present invention, the frequency of an alternating magnetic field formed by the interrogator (the radio wave transmitted by the interrogator) is varied such that all of the overlapped plurality of tags resonate. That is, all of the overlapped plurality of tags can be identified as the oscillation circuit sweeps an oscillation frequency over the frequency range which includes the resonant frequencies of all the superposed plurality of tags from the one with the minimum value to the one with the maximum value.

According to another aspect of the invention, the interrogator is provided with an oscillation circuit which is capable of sweeping a radio wave transmitted from the transmitting/receiving antenna over a predetermined frequency range, and the predetermined frequency range is a frequency range which includes all resonance frequencies of at least one of the tags that vary accordingly by overlapping at least one article to which said tags are attached, and at least one metal plate.

In the apparatus for identifying the article, which is constituted as described above, when at least one tag and at least one metal plate are overlapped, because each tag has an intrinsic resonant frequency that is determined by a distance from other overlapped tags and metal plates the frequency of an alternating magnetic field formed by the interrogator (the radio wave transmitted by the interrogator) is varied such that all of the superposed plurality of tags resonate. That is, all of the superposed plurality of tags can be identified, as the oscillation circuit sweeps an oscillation frequency over the frequency range which includes the resonant frequencies of all the superposed plurality of tags from the one with the minimum value to the one with the maximum value.

BRIEF DESCRIPTION OF THE DRAWINGS

Further objects and advantages of the invention can be more fully understood from the following detailed description taken in conjunction with the accompanying drawings, in which:

Fig. 1 is a circuit configuration drawing showing an apparatus for identifying an article according to a first embodiment of the present invention;
Fig. 2 is a circuit configuration drawing showing a RFID element of a tag;
Fig. 3 is a cross-sectional view along the line A-A' in Fig. 4 showing a state in which the tag is pasted to an article;
Fig. 4 is a cross-sectional view along the line B-B' in Fig. 3;
Fig. 5 is a cross-sectional view along the line C-C' in Fig. 6 showing a second embodiment of the present invention;
Fig. 6 is a cross-sectional view along the line D-D' in Fig. 5; and
Fig. 7 is a circuit configuration drawing corresponding to Fig. 1 showing a third embodiment of the present invention.

DESCRIPTION OF THE PREFERRED EMBODIMENTS

In the following, the preferred embodiments of the present invention will be described with reference to the accompanying drawings.

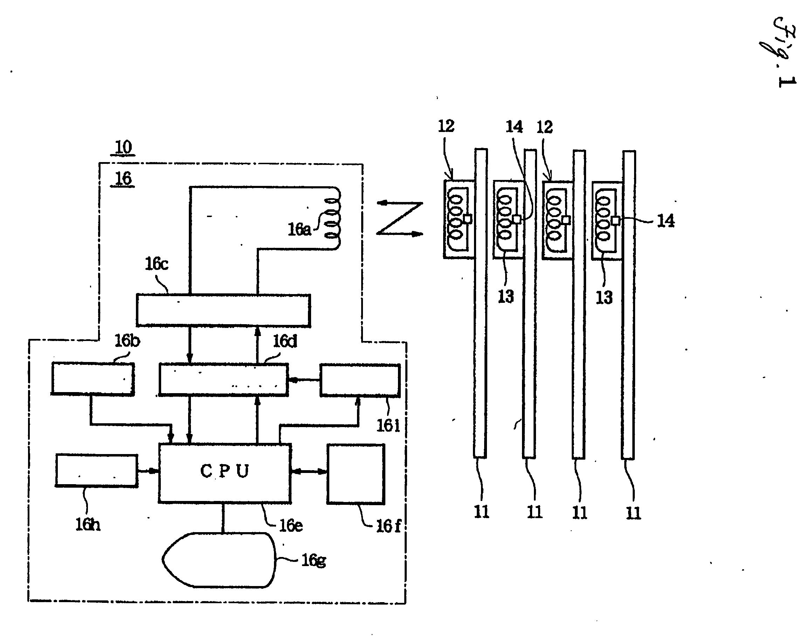

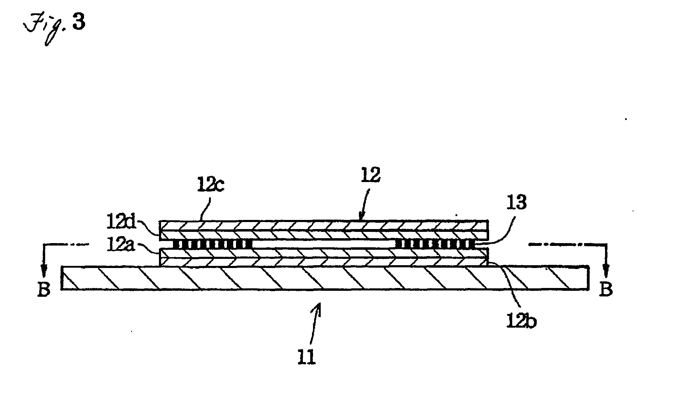

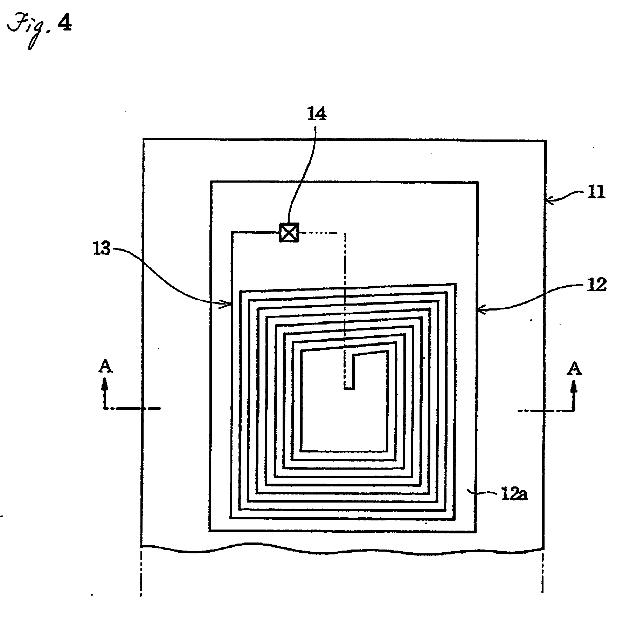

As shown in Fig. 1, an apparatus 10 for identifying an article 11 comprises a tag 12, which is attached to the article 11 having an antenna coil 13 and a RFID element 14 connected to the antenna coil 13, and an interrogator 16 which activates the tag 12 by transmitting a radio wave of a frequency with which the tag 12 resonates from a transmitting/receiving antenna 16a. The antenna coil 13 is, as shown in detail in Figs. 3 and 4, formed by winding an insulated conductor in an approximately square spiral shape and by pasting it to a base plate 12a. Alternatively, it is formed in an approximately square spiral shape by removing, with an etching method, a punching method, and the likes, an unwanted part of a conductive material such as an aluminum foil, a copper foil, and the likes, that is laminated on the base plate 12a.

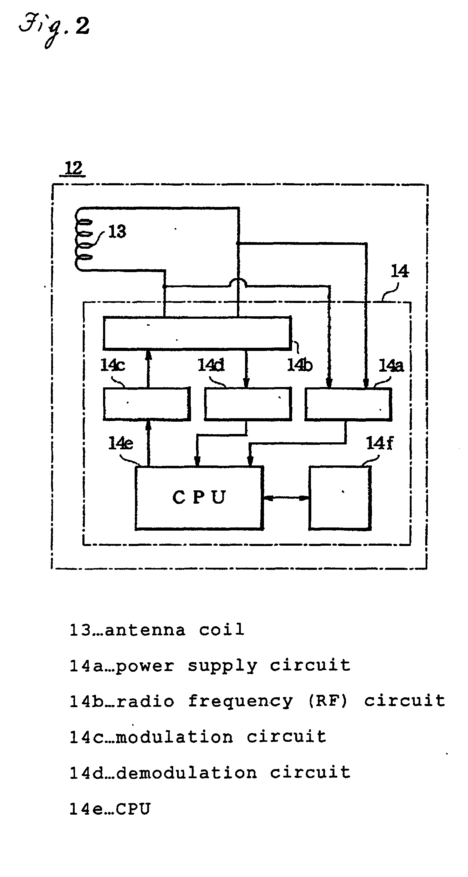

The RFID element 14 is pasted to the base plate 12a (Fig. 4), and includes a power supply circuit 14a, a radio frequency (RF) circuit 14b, a modulation circuit 14c, a demodulation circuit 14d, a CPU 14e, and a memory 14f for storing data about the article connected thereto (Fig. 2). The power supply circuit 14a includes a capacitor (not shown), and this capacitor together with the antenna coil 13 form a resonance circuit. In the present embodiment the RFID element 14 has no battery. As a result, electrical power generated by electro-magnetic induction thereof charges the capacitor when the antenna 13 receives a radio wave of a predetermined resonance frequency. It is arranged that the power supply circuit 14a rectifies and stabilizes this electrical power and then supplies it to the CPU 14e, so as to activate the RFID element 14.

The memory 14f of the RFID element 14 can be a ROM (Read Only Memory), a RAM (Random Access Memory), a non-volatile memory, and the likes, and it performs reading of the stored data in response to a reading command according to data communication of a radio wave from the interrogator 16 under the control of the CPU 14e, as well as performing writing of the data in response to a write command from the interrogator 16.

The article 11 may be, for example, a registered mail envelope containing only paper money (not shown) . In this case, data such as the amount of cash enclosed in the envelope 11, the name of the post office that delivers the envelope 11, the name of the postman, the date and time of arrival or departure of the envelope 11, and the likes, are stored in the memory 14f of the RFID element 14. Further, symbol 12b in Fig. 3 denotes a first adhesive layer for pasting the base plate 12a on a surface of the article 11, symbol 12c denotes a cover layer for covering the antenna 13 and the RFID element 14 on the above-mentioned base plate 12a, and also symbol 12d denotes a second adhesive layer for pasting the cover layer 12c on the base plate 12a.

The interrogator 16 is a RFID controller, and includes the transmitting/receiving antenna 16a, a power supply circuit 16b, a radio frequency (RF) circuit 16c, and a modulation/demodulation circuit 16d (Fig. 1). Further, a memory 16f, a display 16g, and an input unit 16h are connected to a CPU 16e in the interrogator 16. Moreover, an oscillation circuit 16i which is capable of sweeping a radio wave transmitted from the transmitting/receiving antenna 16a in a predetermined frequency range is provided in the interrogator 16. The above-mentioned predetermined frequency range is a frequency range that includes all of the resonance frequencies for a plurality of tags 12 that vary accordingly by overlapping a plurality of articles 11 to which the tags 12 are attached (see Fig. 1).

One example of a method of identifying the article 11 to which the tag 12 is attached according to the interrogator 16 constituted as described above will be described.

In this example, the article 11 is a registered mail envelope in which only paper money is enclosed, and the tag 12 is pasted to this article 11. In the memory 14f of the RFID element 14 of the tag 12, data about the article (such as the amount of the cash enclosed in the envelope 11, the name of the post office that delivers the envelope 11, the name of the postman, the date and the time of arrival or departure of the envelope 11, and the likes) are stored. When transmitting a radio wave from the transmitting/receiving antenna 16a of the interrogator 16 toward the antenna coil 13 of the tag 12 when a plurality of envelopes 11 on which the tags 12 are pasted are overlapped, i.e., when a plurality of envelopes 11 are in a bundle, a mutual induction is generated between the antenna coils 13 of each tag 12 and thus the resonance frequency of each tag 12 varies.

For example, although not shown, consider an RLC circuit in which a resistor and a capacitor are respectively connected to the antenna coil 13 in parallel. When a self-inductance L of the antenna coil 13 is 7.70 mH, a copper loss r of the antenna coil is 700 $\Omega$, a capacitance C of the capacitor is 210 pF, and a resistance R of the resistor is 60 k$\Omega$, a resonance frequency f1 of the RLC circuit is obtained from the equation shown below:

$$f1 = \left(\frac{1}{2\pi}\right)\left[\frac{1}{LC} - \left(\frac{1}{CR}\right)^2\right]^{1/2} = 125\,\text{kHz}$$

On the other hand, when two of the RLC circuits identical to the one described above overlap, a resonance frequency f2 of the RLC circuit is obtained from the equation shown below:

$$f2 = \left(\frac{1}{2\pi}\right)\left[\frac{1}{(L + M)C} - \left(\frac{1}{CR}\right)^2\right]^{1/2} = 96\,\text{kHz}$$

The frequency f2 is less than f1. That is, an apparent self-inductance L increases to (L + M).

Moreover, a space between the above-mentioned two antenna coils is a little less than 1 mm, and the mutual inductance M of the two antenna coils in this case is 5.1 mH.

Further, the copper loss r has no influence on the above-mentioned resonance frequencies f1 and f2.

The CPU 16e of the interrogator 16 causes a radio wave (a carrier wave on which an interrogation signal is carried) to be transmitted from the transmitting/receiving antenna 16a by sequentially changing the frequency of the carrier wave with the oscillation circuit 16i so as to include all of the resonance frequencies of the respective tags 12 that are varied by overlapping them. The interrogation signal is a binary digital signal. This digital signal is generated from a signal generator (not shown) of the interrogator 16, and is carried on a carrier wave of a predetermined frequency by the modulation circuit of the modulation/demodulation circuit 16d, that is, it is modulated. In the RF circuit 16c this modulated signal is amplified and is then transmitted from the transmitting/receiving antenna 16a. The modulation is, for example, ASK (amplitude modulation), FSK (frequency modulation), or a PSK (phase modulation).

The radio wave is received at the antenna coil 13 of the tag 12 that has a resonance frequency that resonates with the above-mentioned predetermined frequency. The interrogator 16 suspends the sweeping of the frequency when the predetermined tag 12 receive as described above, and reads the intrinsic information stored in the memory 14f of the RFID element 14 of the tag 12. That is, upon reception by the above-mentioned predetermined tag 12, electrical power generated by electromagnetic induction is charges a capacitor of the power supply circuit 14a. The power supply circuit 14a rectifies and stabilizes this electrical power and supplies it to the CPU 14e so as to activate the RFID element 14. Then, in the RF circuit 14b of the RFID element 14, only a signal that is necessary for demodulation is taken, and in the demodulation circuit 14d the interrogation signal of the original digital signal is reproduced, and the data of the envelope 11, such as the amount of money enclosed in the envelope 11 and the likes, are transmitted from the memory 14f to the interrogator 16. Transmission of this data is implemented, for example, by modulating the digitized amount of money enclosed with the modulation circuit 14c of the RFID element 14, by amplifying it with the RF circuit 14b, and then by transmitting it from the antenna coil 13.

Then, in the interrogator 16 that receives this data, the information about the envelope 11 can be confirmed with a display 16g. Herein, when writing into the memory 14f of the RFID element 14 of the tag 12, the data written (for example, the date and time, and the name of the post office that performs this checking, i.e., the date and time, and the name of the post office that reads the information about the envelope 11 from the tag 12, and the likes) is inputted from the input means 16h, and is transmitted to the tag 12. This data is written into the memory 14f of the RFID element 14.

When writing in the memory 14f of the RFID element 14 of the predetermined tag 12 is complete, the interrogator 16 resumes the above-mentioned suspended sweeping of the frequency. That is, the frequency of the radio wave (carrier wave on which the interrogation signal is carried) that is transmitted from the transmitting/receiving antenna 16a of the interrogator 16 is sequentially changed by the oscillation circuit 16i, and this radio wave is sequentially received at the antenna coils 13 of the tags 12 having the resonance frequency that resonates with a predetermined frequency. Then, the interrogator 16 again suspends the sweeping of the frequency when another tag 12 resonates with a radio wave of another frequency, and, similarly, to that described above, it reads the data in the memory 14f of the RFID element 14, and writes the predetermined data into this memory 14f.

As described above, a frequency of an alternating magnetic field formed by the interrogator 16 is changed such that, when a plurality of tags 12 overlap, all of the tags 12 resonate. That is, the oscillation circuit 14i sweeps the oscillation frequency with the frequency range of all the resonance frequencies of the overlapped plurality of tags 12 from the one with the minimum value to the one with the maximum value. As a result, the interrogator 16 can identify all of the overlapped plurality of tags 12.

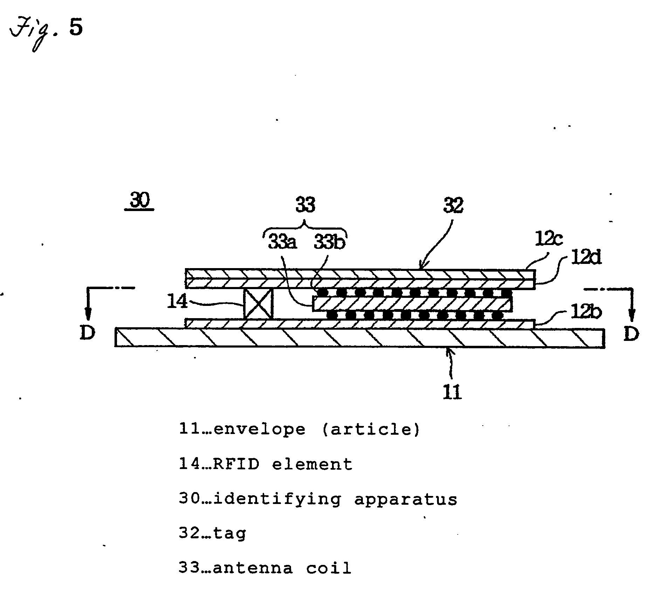

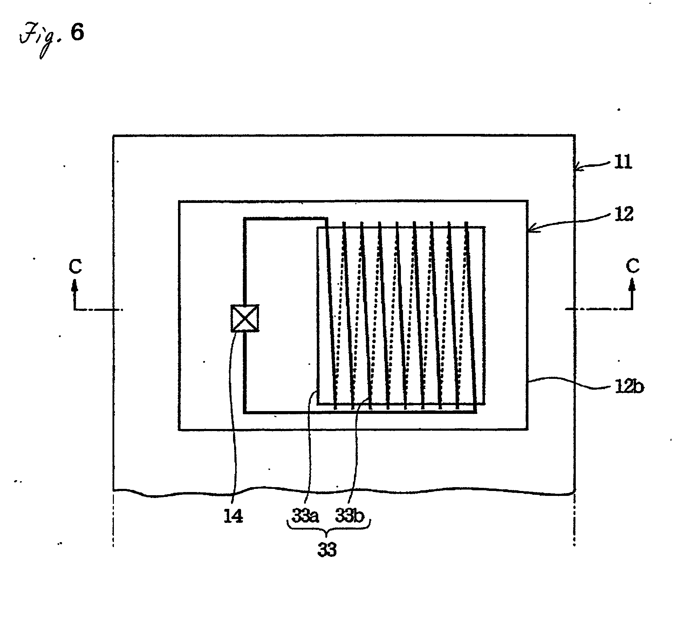

Figs. 5 and 6 show a second embodiment of the present invention. In Figs. 5 and 6, the same symbols as in Figs. 3 and 4 denote the same parts.

In this embodiment, an antenna coil 33 includes a magnetic material 33a that is a magnet core, and a coil body 33b that is wound around the magnetic material 33a. For the shape of the magnetic material 33a, a plate, a cylinder, a solid prism, a hollow cylinder, and the likes may be used. The hollow cylinder may be one in which the cylinder is formed by assembling a plurality of arc -shaped plate pieces, or one in which the cylinder is formed by a thin film or foil. Further, as the magnetic material 33a, the following may be used: (1) a laminated body in which a plurality of thin films or thin plates of a soft magnetic metal and a plurality of insulating thin films are alternately overlapped, or a laminated body in which a plurality of thin films or thin plates of a soft magnetic metal are overlapped such that surfaces thereof are insulated; (2) a composite material of a powder or flakes of a soft magnetic metal and plastics; (3) a composite material of a powder or flakes of a soft magnetic metal, a powder of ferrite, and plastics; (4) a composite material of a powder of ferrite and plastics; and (5) a sintered ferrite, and the likes. Among the above-mentioned (1) to (5), as a magnetic material, it is preferable to use a soft magnetic metal in which the magnetic permeability is not changed according to the surrounding temperature and in which the resonance frequency is not changed when an antenna coil constitutes the resonance circuit. Also, it is preferable that a shape thereof is a thin film, a powder or flakes, so that the resonance characteristics are not degraded by preventing an eddy current from being generated when the resonance frequency is high.

It is preferable to use a film of 5 to 250 $\mu$m in thickness formed with an iron type amorphous alloy, a cobalt type amorphous alloy, a permalloy, or silicon steel. As the soft magnetic metal thin film of the above-mentioned (1), it is preferable to use an insulating resin film of 5 to 50 $\mu$m in thickness such as a polyester film, a polyvinylidene chloride, a polyvinyl chloride, a polyethylene terephthalate, and the likes. Further, the insulating thin film may be insulating paper. As the powders of soft magnetic metal in the above-mentioned (2) and (3), it is preferable to use a carbonyl iron dust or a reduced iron dust. Moreover, as the flakes of soft magnetic metal, it is preferable that after having formed a powder of a soft magnetic metal by refining iron, a permalloy, an amorphous alloy, and the likes using the atomize method, flakes of 0.1 to 10 $\mu$m in thickness obtained by mechanically flattening the powder of soft magnetic metal are used. The other parts are constituted similarly to the first embodiment.

The operation of the identifying apparatus 30 of the article 11 that is constituted as described above is approximately the same as that in the first embodiment, and thus a repeated description will be omitted.

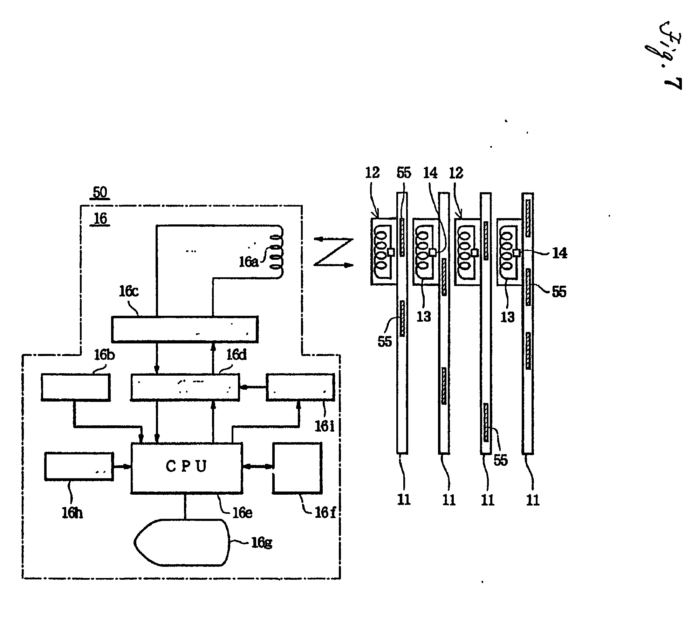

Fig. 7 shows a third embodiment of the present invention. In Fig. 7, the same symbols as those in Fig. 1 denote the same parts.

In this embodiment, one or more metal plates 55 are superposed on one or more articles 11 to which the tags 12 are attached. For example, as well as paper money, coins 55 are enclosed in a registered mail envelope. In this case, the coin 55 corresponds to the above-mentioned metal plate. The other parts are constituted similarly to the first embodiment.

In an identifying apparatus 50 of the article 11 that is constituted as described above, apart from the fact that the resonance frequency of each tag 12 further varies because of the existence of the coin 55 (metal plate), the operation is substantially the same as that in the first embodiment, and thus a repeated description will be omitted.

Further, in the above-mentioned first to third embodiments, as the article, a registered mail envelope is mentioned, but it may be a check, securities, a postcard, or other articles so long as the articles themselves can be overlapped and the tags can be attached thereto.

Moreover, in the above-mentioned third embodiment, as the metal plate, a coin is mentioned, but it may be aluminum foil or other metal plate that is pasted to an envelope and the likes.

Further, in the above-mentioned first to third embodiments, an RFID element without a battery is mentioned, but an RFID element having a battery may be used.

In the following, the embodiments of the present invention will be described in detail together with comparative examples.

<Example 1>

Ten sheets of identical tags were manufactured, each of which resonated at 125 kHz individually, and these tags were overlapped at an interval of 1 mm. The frequency was varied by the oscillation circuit in the interrogator, radio waves were transmitted from the transmitting/receiving antenna toward the above-mentioned overlapped tags.

As a result, when the frequency was swept over the range of 70 kHz to 125 kHz by the oscillation circuit, all of the above-mentioned ten sheets of the overlapped tags could be identified.

<Example 2>

One hundred sheets of identical tags were manufactured, each of which resonated at 125 kHz individually. In these tags, switches for controlling currents flowing through the antenna coils were provided. That is, the above-mentioned switch was formed so as to turn off when communication between the interrogator and the tag was completed. Radio waves were transmitted from the transmitting/receiving antenna toward the above-mentioned one hundred sheets of tags by varying the frequency from 40 kHz to 130 kHz with the oscillation circuit of the interrogator.

As a result, the first tag (of the first sheet) could be identified when the frequency was at 47 kHz, and by gradually increasing the frequency, the last tag (of the 100th sheet) could be identified when the frequency was at 125 kHz.

<Comparative Example 1>

One tag sheet that resonated at 125 kHz was manufactured. While transmitting a radio wave with a frequency of 125 kHz (constant) from the transmitting/receiving antenna of the interrogator toward the above-mentioned one tag sheet, the maximum distance over which an antenna coil of the tag resonated was measured by gradually separating the tag from the interrogator.

As a result, the maximum distance over which the antenna coil of the tag resonated was 52 cm.

<Comparative Example 2>

Two sheets of tags, each of which resonated at 125 kHz individually, were manufactured. When these tags were overlapped with an interval of 1 mm, while transmitting a radio wave of a frequency of 125 kHz from the transmitting/receiving antenna of the interrogator toward the above-mentioned superposed two sheets of tags, the maximum distance over which an antenna coil of the tag resonated was measured by gradually separating the tag from the interrogator.

As a result, the maximum distance over which the antenna coil of the tag resonated was substantially reduced to 1.5 cm compared to comparison example 1.

<Comparative Example 3>

Three sheets of tags, each of which resonated at 125 kHz individually, were manufactured. When these tags were overlapped with an interval of 1 mm, while transmitting a radio wave of a frequency of 125 kHz from the transmitting/receiving antenna of the interrogator toward the above-mentioned superposed three sheets of tags, the maximum distance over which an antenna coil of the tag resonated was measured by gradually separating the tag from the interrogator.

As a result, when placing the above-mentioned overlapped tags in the vicinity of the transmitting/receiving antenna, in which the magnetic field intensity was large, two tags at both ends could be identified because a mutual induction due to the overlapping was relatively small, but the tag in the middle could not be identified because a mutual induction due to the overlapping was relatively large.

As described above, according to the present invention, the interrogator is provided with the oscillation circuit which is capable of sweeping the radio wave transmitted from the transmitting/receiving antenna over a predetermined frequency range. As the above-mentioned predetermined frequency range, it is arranged to be a frequency range which includes all of resonance frequencies of a plurality of tags that vary accordingly by overlapping a plurality of articles to which the tags are attached. When the plurality of tags are overlapped, the frequency of the alternating magnetic field formed by the interrogator is varied such that all of the overlapped plurality of tags resonate. That is, the oscillation circuit sweeps the oscillation frequency over the frequency range which includes the resonant frequencies of all the superposed plurality of tags from the one with the minimum value to the one with the maximum value. As a result, the interrogator enables all of the superposed plurality of tags to be identified.

Further, the interrogator is provided with the transmission circuit which is capable of sweeping the radio wave transmitted from the transmitting/receiving antenna over a predetermined frequency range. As the predetermined frequency range, it is arranged to be a frequency range which includes all of the resonance frequencies of one or more tags that vary accordingly by overlapping one or more articles to which said tags are attached, and one or more metal plates. When one or more tags and one or more metal plates are overlapped, the frequency of the alternating magnetic field formed by the interrogator is varied such that all of the overlapped plurality of tags resonate. That is, the oscillation circuit sweeps the oscillation frequency over the frequency range which includes the resonance frequencies of all the overlapped plurality of tags from the one with the minimum value to the one with the maximum value. As a result, similarly to above, all of the superposed plurality of tags can be identified.

Fig. 1

10...identifying apparatus
11...envelope (article)
12...tag
13...antenna coil
14...RFID element
16...interrogator
16a...transmitting/receiving antenna
16b...power supply circuit
16c...radio frequency (RF) circuit
16d...modulation/demodulation circuit
16e...CPU
16f...memory
16g...display
16h...input unit
16i...oscillation circuit

Fig. 2

13...antenna coil
14a...power supply circuit
14b...radio frequency (RF) circuit
14c...modulation circuit
14d...demodulation circuit
14e...CPU
14f...memory

Fig. 5

11...envelope (article)
14..RFID element
30...identifying apparatus
32...tag
33...antenna coil

Fig. 7

11...envelope (article)
12...tag
13...antenna coil
14...RFID element
16...interrogator
16a...transmitting/receiving antenna
16b...power supply circuit
16c...radio frequency (RF) circuit
16d...modulation/demodulation circuit
16e...CPU
16f...memory
16g...display
16h...input unit
16i...oscillation circuit

## Claims

**1.** Method for identifying stacked articles comprising tags (12) attached to said articles, the tags overlapping with a plurality of another tags attached to another stacked articles,

a) using a tag having an antenna coil (13) and a RFID element (14) connected to said antenna coil (13), a memory (14f) for storing data about said article (11) being provided in said RFID element (14); and
b) using an interrogator (16) for activating said tag (12) by transmitting a radio wave with which said tag (12) resonates from a transmitting and receiving antenna, and for generating a response signal from said tag (12) by reading data from said memory (14f) in response to a reading command according to a data communication of said radio wave and by writing the data into said memory (14f) in response to a writing command,
c) whereby said interrogator (16) is provided with an oscillation circuit (16i) which sweeps the radio wave transmitted from said transmitting antenna (16a) over a predetermined frequency range, and each tag has an intrinsic resonant frequency that is determined by the distance from other overlapped tags, and
d) said predetermined frequency range is a frequency range which includes all resonance frequencies of the plurality of said overlapped tags that vary accordingly by overlapping the stacked articles (11)

**2.** An system for identifying stacked articles, including
a tag (12) being attached to said articles (11), said tag having an antenna coil (13) and a RFID element (14) connected to said antenna coil (13), a memory (14f) for storing a data inherent in said article being provided in said RFID element (14); and
an interrogator (16) for activating said tag (12) by transmitting a radio wave of a frequency with which said tag (12) resonates from a transmitting/receiving antenna (16a), and for generating a response signal from said tag (12) by reading data from said memory (14f) in response to a reading command according to a data communication of said radio wave, and by writing the data into said memory (14f) in response to a writing command, being **characterized in that**;
said interrogator (16) is provided with an oscillation circuit (16i) which is capable of sweeping the radio wave transmitted from said transmitting/receiving antenna (16a) over a predetermined frequency range;
and said predetermined frequency range is a frequency range which includes all resonance frequencies of said tags (12) that vary accordingly by overlapping at least one article (11) to which said tags (12) are attached, the intrinsic resonant frequency of each tag being determined by the distance from other overlapped tags.

## Patentansprüche

**1.** Verfahren zum Identifizieren gestapelter Gegenstände, umfassend Kennzeichnungen (12), die an den Gegenständen befestigt sind, wobei sich die Kennzeichnungen mit mehreren anderen Kennzeichnungen, die an anderen gestapelten Gegenständen befestigt sind, überdecken,

a) Verwenden einer Kennzeichnung mit einer Antennenspule (13) und eines RFID-Elements (14), das mit der Antennenspule (13) verbunden ist, eines Speichers (14f) zum Speichern von Daten über den Gegenstand (11), der in dem RFID-Element (14) bereitgestellt ist, und

b) Verwenden einer Abfrageeinrichtung (16) zum Aktivieren der Kennzeichnung (12) durch Senden einer Radiowelle, mit der die Kennzeichnung in Resonanz gerät, von einer Sendeantenne und einer Empfangsantenne, und zum Erzeugen eines Antwortsignals von der Kennzeichnung (12) durch Lesen von Daten aus dem Speicher (14f) in Erwiderung eines Lesebefehls gemäß einer Datenübertragung der Radiowelle und durch Schreiben der Daten in den Speicher (14f) in Erwiderung eines Schreibbefehls,

c) wodurch die Abfrageeinrichtung (16) mit einem Schwingkreis (16i) ausgestattet ist, der die von der Sendeantenne (16a) gesendete Radiowelle über einen vorgegebenen Frequenzbereich abtastet, und jede Kennzeichnung eine spezifische Resonanzfrequenz aufweist, die durch die Entfernung von anderen überdeckten Kennzeichnungen bestimmt wird, und

d) der vorgegebene Frequenzbereich ein Frequenzbereich ist, der alle Resonanzfrequenzen der Vielzahl der überdeckten Kennzeichnungen enthält, die sich entsprechend durch Überdecken der gestapelten Gegenstände (11) ändern.

**2.** System zum Identifizieren gestapelter Gegenstände, umfassend

eine Kennzeichnung (12), die an den Gegenständen (11) befestigt ist, wobei die Kennzeichnung eine Antennenspule (13) und ein RFID-Element (14), das mit der Antennespule (13) verbunden ist, aufweist, einen Speicher (14f) zum Speichern von Daten, die dem Gegenstand eigen sind, der in dem RFID-Element (14) bereitgestellt ist; und

eine Abfrageeinrichtung (16) zum Aktivieren der Kennzeichnung (12) durch Senden einer Radiowelle einer Frequenz, mit der die Kennzeichnung (12) in Resonanz gerät, von einer Sende-/Empfangsantenne (16a) und zum Erzeugen eines Antwortsignals von der Kennzeichnung (12) durch Lesen von Daten aus dem Speicher (14f) in Erwiderung eines Lesebefehls gemäß einer Datenübertragung der Radiowelle und durch Schreiben der Daten in den Speicher (14f) in Erwiderung eines Schreibbefehls, **dadurch gekennzeichnet, dass**:

die Abfrageeinrichtung (16) mit einem Schwingkreis (16i) ausgestattet ist, der in der Lage ist, die von der Sende-/Empfangsantenne (16a) gesendete Radiowelle über einen vorgegebenen Frequenzbereich abzutasten; und der vorgegebene Frequenzbereich ein Frequenzbereich ist, der alle Resonanzfrequenzen der Kennzeichnungen (12) enthält, die sich entsprechend durch Überdecken wenigstens eines Gegenstands (11), an dem die Kennzeichnungen (12) befestigt sind, verändern, wobei die spezifische Resonanzfrequenz jeder Kennzeichnung durch die Entfernung von anderen überdeckten Kennzeichnungen bestimmt wird.

## Revendications

**1.** Procédé d'identification des articles empilés comprenant des étiquettes (12) fixées aux articles, les étiquettes enchevauchant une pluralité d'autres étiquettes fixées à d'autres articles empilés,

a) en utilisant une étiquette comprenant une bobine-antenne (13) et un élément d'identification de radiofréquence (14) raccordé à la dite bobine-antenne (13), une mémoire (14f) pour mémoriser des données par rapport au dit article (11) étant prévu dans le dit élément d'identification de radiofréquence (14), et

b) en utilisant un interrogateur (16) pour activer la dite étiquette (12) en transmettant une onde radioélectrique avec laquelle la dite étiquette (12) résonne à partir d'une antenne de transmission et de réception et pour générer un signal de réponse de la dite étiquette (12) en lisant des données de la dite mémoire (14f) en réaction à une commande d'extraction selon une communication de données de la dite onde radioélectrique et en écrivant les données dans la dite mémoire (14f) en réaction à une commande d'écriture,

c) le dit interrogateur (16) étant muni d'un circuit oscillant (16i) qui balaye l'onde radioélectrique transmise par la dite antenne de transmission (16a) dans un régime prédéterminé des fréquences, et chaque étiquette a une fréquence résonnante inhérente qui est déterminée par la distance à d'autres étiquettes enchevauchées, et

d) le dit régime prédéterminé des fréquences est un régime des fréquences qui comprend toutes les fréquences de résonance de la pluralité des étiquettes enchevauchées qui varient donc avec le recouvrement des articles empilés (11).

**2.** Système d'identification des articles empilés, comprenant

une étiquette (12) qui est fixée aux dits articles (11), la dite étiquette comprenant une bobine-antenne (13) et un élément d'identification de radiofréquence (14) raccordé à la dite bobine-antenne (13), une mémoire (14f) pour mémoriser des données inhérentes du dit article étant prévu dans le dit élément d'identification de radiofréquence (14), et

un interrogateur (16) pour activer la dite étiquette (12) en transmettant une onde radioélectrique d'une fréquence avec laquelle la dite étiquette (12) résonne à partir d'une antenne de transmission et de réception (16a) et pour générer un signal de réponse de la dite étiquette (12) en lisant des données de la dite mémoire (14f) en réaction à une commande d'extraction selon une communication de données de la dite onde radioélectrique et en écrivant les données dans la dite mémoire (14f) en réaction à une commande d'écriture,

**caractérisé en ce que**

le dit interrogateur (16) est muni d'un circuit oscillant (16i) qui est capable de balayer l'onde radioélectrique transmise par la dite antenne de transmission et de réception (16a) dans un régime prédéterminé des fréquences ;

et le dit régime prédéterminé des fréquences est un régime des fréquences qui comprend toutes les fréquences de résonance des étiquettes (12) qui varient donc avec le recouvrement d'au moins un article (11) auquel les dites étiquettes (12) sont fixées, la fréquence résonnante inhérente de chaque étiquette étant déterminée par la distance à d'autres étiquettes enchevauchées.

Fig. 1

EP 1 120 733 B1

Fig. 2

13...antenna coil

14a...power supply circuit

14b...radio frequency (RF) circuit

14c...modulation circuit

14d...demodulation circuit

14e...CPU

12

_Fig._ **3**

*Fig.* 4

*Fig.* 5

11...envelope (article)

14...RFID element

30...identifying apparatus

32...tag

33...antenna coil

*Fig.* 6

Fig. 7

EP 1 120 733 B1